# EUROPEAN PATENT SPECIFICATION

(11) **EP 2 178 279 B1**
(45) Date of publication and mention of the grant of the patent: **28.08.2013**
(21) Application number: 09172588.7
(22) Date of filing: 08.10.2009
(51) Int. Cl.: H04M 1/2745, H04M 1/725, G06F 9/44, G06F 3/048

(54) **Generation method and mobile terminal for optimizing mobile terminal operation sequence**
Erzeugungsverfahren und mobiles Endgerät zur Optimierung der Betriebssequenz des mobilen Endgerätes
Procédé de génération et terminal mobile pour optimiser la séquence d'opération de terminal mobile

(30) Priority: 14.10.2008 CN 200810224426; 30.07.2009 WO PCT/CN2009/072999
(43) Date of publication of application: 21.04.2010
(73) Proprietor: Huawei Device Co., Ltd., Longgang District Shenzhen Guangdong 518129 (CN)
(72) Inventor: Ma, Yong, 518129, Shenzhen Guangdong (CN); Fang, Fei, 518129, Shenzhen Guangdong (CN)
(74) Representative: Thun, Clemens

(56) References cited:
- EP-A1- 0 579 501
- US-A- 5 726 688
- US-A- 6 125 287
- US-A1- 2008 146 190

## Description

### FIELD OF THE TECHNOLOGY

The invention relates to the mobile terminal technology, in particular to a generation method and a mobile terminal for optimizing a mobile terminal operation sequence.

### BACKGROUND

With the development of technologies related to mobile terminals, more and more services are provided for users, and the users pay more and more attention to ease-of-use of the mobile terminals in the process of using various services.

Different mobile terminal manufacturers make a great number of ease-of-use enhancement designs for various service functions of the mobile terminals, for example, reducing process steps of calling, sending short messages, etc.; and the mobile terminal manufacturers provide certain customized functions to meet diversified demands of the users, for example, the users can define different functions for shortcut keys, can define functions of left and right soft keys, or arrange layout on a main menu interface, etc., thus the users can get shortcut start-up modes for frequently used applications. In a latest Symbian (the name of a mobile terminal) intelligent mobile terminal, a specialized shortcut area is provided, and the users can directly put the frequently used applications in the shortcut area so that the applications can be started up without searching and selecting step by step. However, different mobile terminal manufacturers have different understanding on ease-of-use, so operation flows of the same application service are provided with different characteristics and even totally different. For example, the users must restudy and adapt to operation sequences of new application services after changing the mobile terminals, and if the same user has different requirements at different time, the existing fixed operation sequence can not ensure the ease-of-use for the user in different circumstances.

US 5726688A discloses a predictive and adaptive interface for a computer. A user's interaction with the computer is monitored, and future interactions are predicted based on previous interactions. The interface is adapted to the user's preferences, using the predictions. For example, if a particular user repeatedly selects one option from a given menu, this revealed selection is detected and the given menu is adapted to the user's selection by eliminating other options from the menu.

EP 0579501A1 discloses an operation sequence user adaptive system for use in a processing system. The adaptive system includes a function of storing a data structure for storing a usage frequency of each of the functions, an update function of monitoring an operation conducted by the user for each function and updating a weight between particular functions successively operated, and an combining function of combining the particular functions associated with the weight when the weight updated by the update function exceeds a predetermined threshold value.

US 20080146190A1 discloses a method for compiling and presenting an ordered list for each of the available options for a communication device. The method includes: monitoring a frequency of employment of available options by a user of the communication device, dynamically compiling a list for each of the available options so that the list is ordered from the most frequently employed to the least frequently employed, and presenting the ordered list for access by the user of the communicating device.

During the process of realizing the invention, the inventor found the following problem in the prior art: ease-of-use technologies provided by different manufacturers for the application services of the mobile terminals are hard to meet the diversified demands of different users.

### SUMMARY

The invention aims to provide a generation method and a mobile terminal for optimizing a mobile terminal operation sequence to solve the disadvantages that ease-of-use technologies of application services of mobile terminals are hard to meet diversified demands of different users in the prior art.

A method for generating a mobile terminal operation sequence includes: dividing a process of an application service of the mobile terminal into one or multiple functional steps after receiving an instruction that a user expects to customize an operation sequence; providing at least two operation modes in at least one functional step for completing the at least one functional step; selecting an operation mode from the at least two operation modes for completing the at least one functional step; and generating the operation sequence of the application service according to the selected operation modes of all the functional steps. Selecting the operation mode for completing the at least one functional step further comprises making the operation mode selected in the current functional step as a background process/thread of the mobile terminal and hiding the corresponding display interface in the process of the application service.

A mobile terminal for optimizing a mobile terminal operation sequence includes: an application service dividing module configured to divide a process of an application service of the mobile terminal into one or multiple functional steps after receiving an instruction that a user expects to customize an operation sequence; an operation mode providing module configured to provide at least two operation modes in at least one functional step for completing the at least one functional step; an operation mode recording module configured to select an operation mode from the at least two operation modes for completing the at least one functional step; and an operation sequence generating module configured to form the operation sequence of the application service with the selected operation modes of all the functional steps. The operation mode recording module further comprises a display interface hiding module configured to make the operation mode selected in the at least one functional step as a background process/thread of the mobile terminal, and hide the corresponding display interface in the process of the application service.

A method for implementing a mobile terminal application service includes: dividing a process of an application service of the mobile terminal into one or multiple functional steps after receiving an instruction that a user expects to customize an operation sequence; providing at least two operation modes in at least one functional step for completing the at least one functional step; selecting an operation mode from the at least two operation modes for completing the at least one functional step; and executing the selected operation modes of all the functional steps of the application service. Selecting the operation mode for completing the at least one functional step further comprises making the operation mode selected in the current functional step as a background process/thread of the mobile terminal and hiding the corresponding display interface in the process of the application service.

The embodiment of the invention has the beneficial effects of dynamically configuring the operation sequences suitable for use habits of different users according to respective requirements, and providing diversified operation sequences for the users, which enhances user experience.

### BRIEF DESCRIPTION OF THE DRAWINGS

To clearly describe the technical proposals in the embodiment of the invention, the accompanying drawings which are used in the description of the embodiment are briefly introduced as follows. Obviously, the accompanying drawings described below are only some embodiments of the invention, and other accompanying drawings can be obtained by those of ordinary skill in the art without creative labor.

Figure 1 is a structural schematic diagram of the mobile terminal of the embodiment of the invention;

Figure 2 is a structural schematic diagram of the telephone directory module of the embodiment of the invention;

Figure 3 is a schematic diagram of the interface provided for a user by the telephone directory module of the embodiment of the invention;

Figure 4 is a schematic diagram of the interface provided for a user by the frequently used contact person module of the embodiment of the invention;

Figure 5 is a flow schematic diagram of the method for generating the mobile terminal operation sequence of the embodiment of the invention; and

Figure 6 is a flow schematic diagram of the method for implementing the mobile terminal application service of the embodiment of the invention.

### DETAILED DESCRIPTION

To clearly describe the aim, technical characteristics and implementation effects of the invention, the technical proposal of the invention is more specifically described by reference to the accompanying drawings and preferred embodiments. Obviously, the described embodiments are only some embodiments of the invention instead of all embodiments. Other embodiments obtained by those of ordinary skill in the art without creative labor based on the embodiments of the invention belong to the protection scope of the invention.

The embodiment of the invention provides a technology of dynamically modifying an operation sequence of an application service in the process of using the application service of a mobile terminal. A user can dynamically configure the operation sequence most suitable for respective use habit according to respective requirement.

In the embodiment of the invention, an application is divided into at least one functional step, then each functional step is provided with at least one operation mode available for the user, and each operation mode is optimized for a specific use scene. The user selects the most appropriate operation mode for each functional step according to the respective use habit, and an aggregate of the operation modes of all the functional steps forms an operation sequence of the application, and the operation sequence can meet individual requirements of the user.

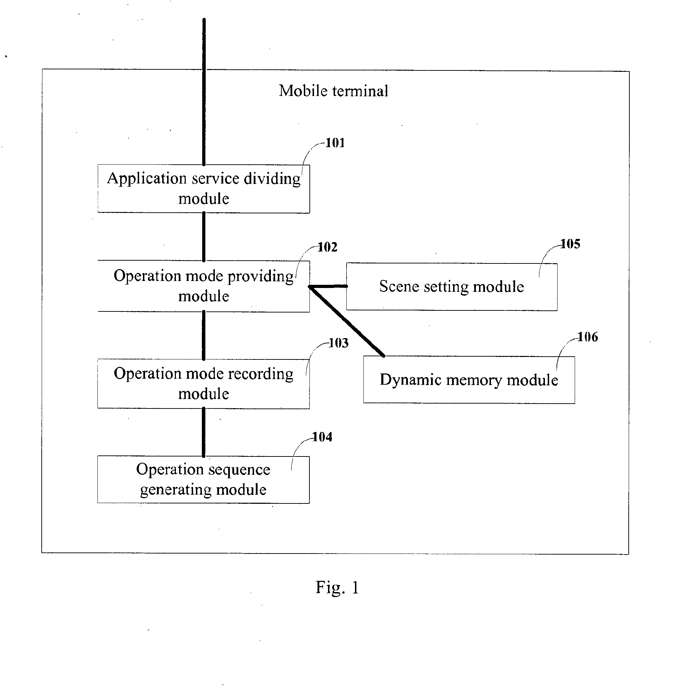

To further disclose the technical characteristics of the invention, description is made by reference to preferred embodiments. A mobile terminal of optimizing a mobile terminal operation sequence, as shown in Figure 1, generally includes:

an application service dividing module 101 configured to divide a process of an application service into at least one functional step after receiving an instruction that a user expects to customize a new operation sequence which accords with own personality;

an operation mode providing module 102 configured to provide at least two operation modes in at least one functional step for completing the current functional step;

an operation mode recording module 103 configured to select an operation mode for completing the current functional step and record the selected operation mode; and

an operation sequence generation mode 104 configured to form an operation sequence of the application service with all the selected operation modes.

The operation mode recording module 103 can further include a display interface hiding module configured to make the operation mode selected in the current functional step as a background process/thread of the mobile terminal, and hide the corresponding display interface in the process of the application service.

When the mobile terminal with the above functions is applied to input information of the contact person, the mobile terminal can further include:

a scene setting module 105 which is connected with the operation mode providing module 102 and is configured to provide the display interfaces corresponding to different operation modes in the functional step for the user, and provide an optimized operation mode for each different scene for the user to choose and determine the most suitable operation sequence.

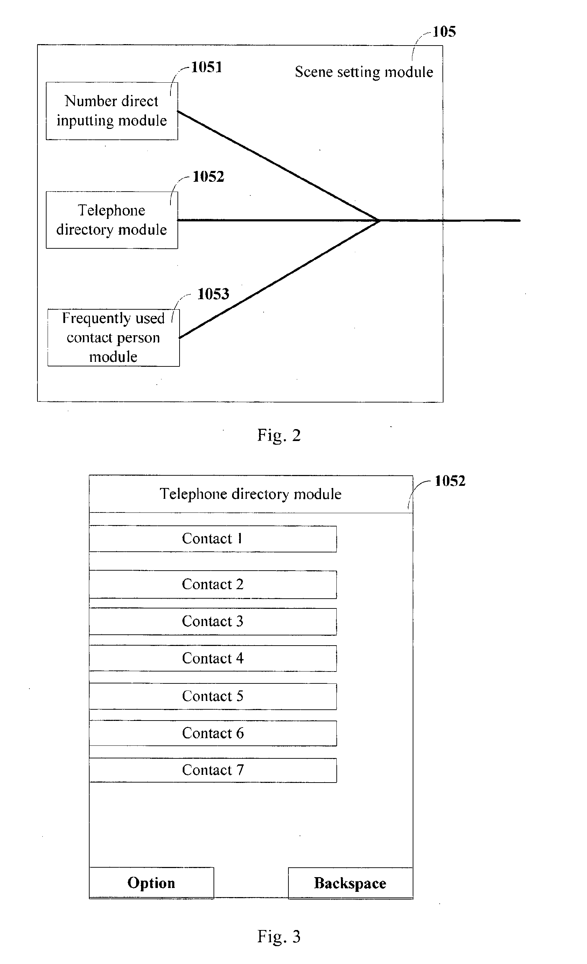

As shown in Figure 2, in the mobile terminal, a process of sending a short message is divided into two main functional steps: inputting content of the short message, and inputting information of contact persons. The inputting information of the contact persons is provided with three operation interfaces for different users and implemented by three input modules respectively. Then, the scene setting module 105 is configured to provide the operation interfaces of the different input modules for the user at different time. More specifically, the user mainly uses the mobile terminal to contact business partners at working hours, so selecting in a telephone directory module 1052 is comparatively convenient; and the user mainly contacts few friends at individual spare time, and the input interface of a frequently used contact person module 1053 is more convenient for use in that period. The mobile terminal loaded with the scene setting module 105 can be combined with use scenes of the mobile terminal.

The operation modes of inputting the information of the contact person generally include directly inputting a number, selecting the contact person from a telephone directory, selecting the contact person from a frequently used contact person list, etc. In the prior art, the operation interface configured to input the information of the contact person can provide only one of the input modes, thus the mobile terminals with the same type can not meet requirements of different users. However, in the embodiments of the present invention, the mobile terminal can maintain a plurality of operation interfaces, which are implemented by different input modules respectively, for different users. The different input modules may include:

a number direct inputting module 1051, configured to receive phone contact information of recipients directly input by the user;

the telephone directory module 1052, configured to store all the phone contact information recorded by the mobile terminal; and

the frequently used contact person module 1053, configured to record the phone contact information of the contacts which are frequently contacted by the user.

If the mobile terminal combines the three input modules (the number direct inputting module 1051, the telephone directory module 1052 and the frequently used contact person module 1053), in the functional step that the user inputs information of the contact persons, the operation modes that can be provided by the mobile terminal are as follows.

The user inputs information of the contact persons by itself in the interface which is provided by the number direct inputting module 1051 for the user, for example, inputting names, telephone numbers, even addresses respectively; and the user forming a habit of manually inputting the information of the contact persons can select the input interface provided by the number direct inputting module 1051 to directly input the number, and rapidly add information of new contact persons. Meanwhile, the number direct inputting module 1051 further provides an option configured to select other input modules when the user is not adapted to the current input environment and a backspace configured to return to the previous operation interface.

In another embodiment, as shown in Figure 3, in the interface which is provided by the telephone directory module 1052 for the user, the user selects from the existing contact persons in the current telephone directory. Meanwhile, the telephone directory module 1052 further provides an option configured to select other input modules when the user is not adapted to the current input environment and a backspace configured to return to the previous operation interface.

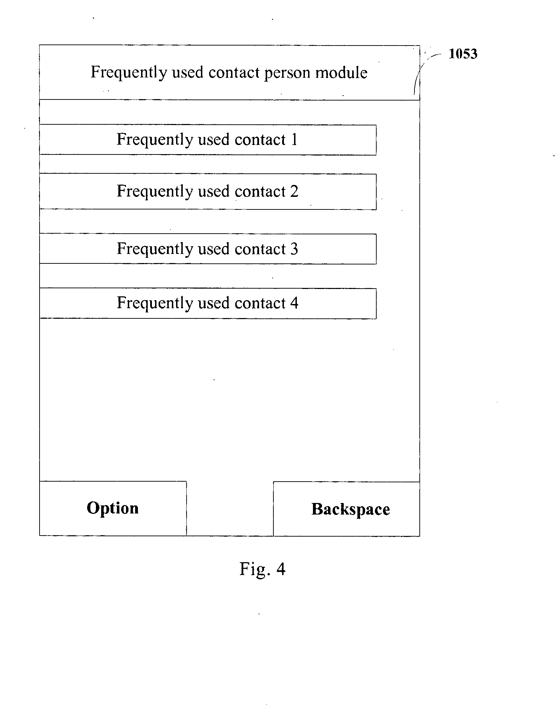

Alternatively, as shown in Figure 4, in the interface which is provided by the frequently used contact person module 1053 for the user, the user selects from the currently recorded frequently used contact persons, and the difference between the frequently used contact persons and the existing contact persons in the telephone directory module 1052 is defined by the user in advance. Meanwhile, the frequently used contact person module 1053 further provides an option configured to select other input modules when the user is not adapted to the current input environment and a backspace configured to return to the previous operation interfaces.

The invention further provides a compromise embodiment which is relatively suitable for the three operation modes, provided above respectively by the number direct inputting module 1051, the telephone directory module 1052 and the frequently used contact person module 1053. The compromise embodiment includes that a manual input box is configured on the upper area of the input interface, and the lower area of the input interface is the frequently used contact persons or a list of the contact persons which are arranged according to the sequence of phonetic letters and Chinese character strokes, and the input interface can serve as a default interface.

The embodiment of the invention is not limited to providing multiple operation modes for a single functional step, and also provides a function of dynamic learning prompt, and the mobile terminal can further include: a dynamic memory module 106 configured to automatically record a habit of a user to use short messages in the process of using the mobile terminal and prompt the user to select a more suitable operation interface when finding a mode which the user tends to choose. Therefore, the dynamic memory module 106 can automatically record the operation habit of the user in the process of using the application service, search for the operation mode corresponding to the operation habit and send the operation mode to the operation mode providing module 102.

The mobile terminal of the embodiment of the invention divides the process of the application service into at least one functional step after receiving an instruction that the user expects to customize a new operation sequence which accords with the personality, provides at least two operation modes in the at least one functional step, and forms the final operation sequence according to the selection of the user; users can dynamically configure the operation sequences which are most suitable for the use habits of the users according to respective requirements; and the users are provided with diversified operation sequences, thus enhancing user experience.

Further, an order of the functional steps can be changed to further optimize the operation sequence. Taking sending a resource searched from the Internet to a given contact person as an embodiment, the invention provides an optimization mode which can simplify the functional steps and change the sequence of various functional steps.

The process that a user searches for a resource from the Internet and sends the resource to a given contact person can be divided into the following functional steps before optimization:

Step A, searching in the Internet, and finding the desired resource;

Step B, downloading the resource and storing in a given path;

Step C, opening a short message operation interface;

Step D, loading the resource to the short message operation interface;

Step E, inputting information of a contact person in the short message operation interface; and

Step F, pressing a send key to send the short message.

The above process includes six steps. If the user requires to execute the functional steps frequently, the user can feel fussy about executing the six functional steps for each time, thus the process needs simplification; the dynamic memory module 106 can also find that the user frequently executes the functional steps based on counting, so the dynamic memory module 106 can query the user whether to optimize the functional steps, if necessary, the operation mode providing module 102 is activated.

The operation mode providing module 102 is configured to provide concrete applications of modifying and optimizing the operation sequence. In the current embodiment, the concrete applications can be that:

in the step B, website address or effective keywords of the network resource can be extracted due to limitation of different conditions, for example, poor network signal, inadequate bandwidth, etc.;

in the step D, the address which is selected by the user is loaded to text content of the short message by default so that the process of pasting and copying by the user can be avoided; and

in the step E, selection can be made among the number direct inputting module 1051, the telephone directory module 1052 and the frequently used contact person module 1053

When the operation mode providing module 102 obtains alternative technologies of the steps B, D and E, the operation mode providing module 102 queries setting of the user step by step and modifies the setting; meanwhile, the operation mode providing module 102 can reduce operation of the step C for the user, and automatically opens a short message operation interface by default.

Meanwhile, the ongoing optimization can change the sequence of various functional steps, for example, the step D and the step E can be exchanged, and furthermore, the mobile terminal automatically provides the contact persons which are possibly input. Alternatively, if the step B is executed, the user can be deemed to send the short message due to the specific path, the step E can be directly executed, the mobile terminal automatically provides the contact persons which are possibly input, after the user makes selection, the step D is automatically executed to load the downloaded resource.

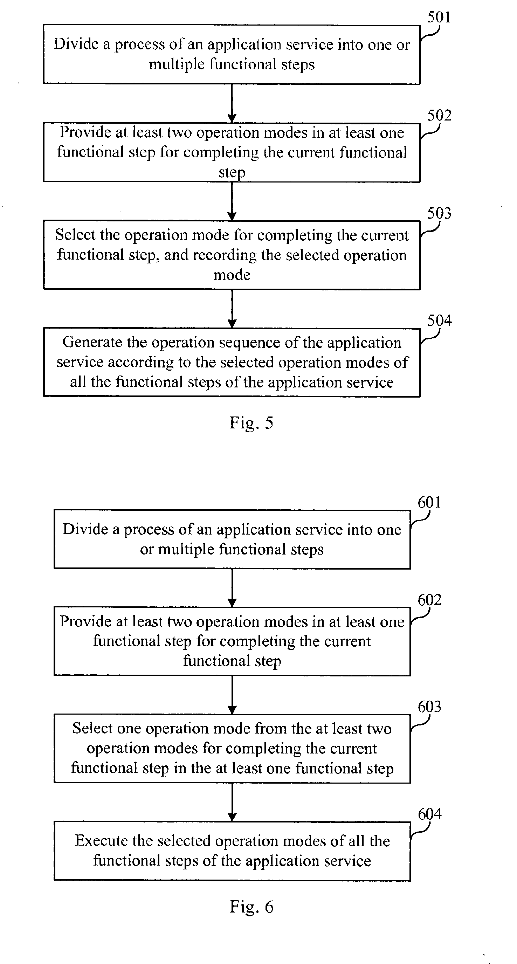

Corresponding to the mobile terminal described in the embodiment of the invention, a method for generating a mobile terminal operation sequence is provided. As shown in Figure 5, the method includes:

step 501, dividing a process of an application service into one or multiple functional steps;

step 502, providing at least two operation modes in at least one functional step for completing the current functional step;

step 503, selecting the operation mode for completing the current functional step, and recording the selected operation mode;

step 504, generating the operation sequence of the application service according to the selected operation modes of all the functional steps of the application service

Before providing at least two operation modes for completing the current functional step, the method may further include recording a use habit of a user, and searching for all or optimized operation modes corresponding to the use habit according to the use habit.

If contact information of a contact person is needed at present, for example, a telephone number, at least two operation modes for completing the current functional step are provided. If the current functional step is inputting the information of the contact person, the provided operation modes at least include: directly inputting the number, selecting the contact person from a telephone directory and selecting the contact person from a frequently used contact person list.

Each operation mode contained in the functional step corresponds to a display interface.

The providing at least two operation modes for completing the current functional step further includes making the operation mode selected in the current functional step as a background process/thread of the mobile terminal, and hiding the corresponding display interface in the process of the application service.

By using the method which is provided by the embodiment of the invention, the mobile terminal can optimize the operation modes of different application services according to preferences of the users and provide more humanized services, which facilitates the operator to easily popularize various application services.

Based on the method for generating a mobile terminal operation sequence, a method for implementing a mobile terminal application service is provided for specific operations of a user. As shown in Figure 6, the method includes:

step 601, dividing a process of an application service into one or multiple functional steps;

step 602, providing at least two operation modes in at least one functional step for completing the current functional step;

step 603, selecting one operation mode from the at least two operation modes for completing the current functional step in the at least one functional step;

step 604, executing the selected operation modes of all the functional steps of the application service.

The providing at least two operation modes for completing the current functional step in at least one functional step further includes that when the current functional step is inputting information of a contact person, the provided operation modes at least include directly inputting a number, selecting the contact person from a telephone directory and selecting the contact person from a frequently used contact person list.

By using the method of the embodiment, the users can select the most suitable operation modes while using various application services, which enhances user experience.

Those of ordinary skill in the art can understand that all or part of the steps in the method of the embodiment can be realized by adopting a program to instruct related hardware. The program can be stored in a readable memory media of the mobile terminal, and the ongoing program includes the steps of the embodiment of the methods. The memory media includes ROM/RAM, SD card, SIM card, etc.

The embodiment of the invention has the following beneficial effects: different users can dynamically configure the operation sequences which are most suitable for respective use habits according to respective requirements by the method of optimizing the operation mode and the mobile terminal provided by various embodiments, which avoids the disadvantages that the fixed operation mode can not be configured to optimize all the scenes and user habits and is not suitable for diversified requirements of the users.

It should be noted that, the embodiments are only for the purpose of describing the technical proposal of the invention, and are not to be construed to limit thereto. All parameter values can be regulated according to the actual situations, and belongs to the protection scope of the invention. Those of ordinary skill in the art should understand that the technical proposal of the invention can be modified or equivalently replaced without departing from the scope of the technical proposal of the invention, and the modification and equivalent replacement should be merged in the claim scope of the invention.

## Claims

1. A method for generating a mobile terminal operation sequence, **characterized in**, comprising:
dividing (501) a process of an application service of the mobile terminal into one or more functional steps after receiving an instruction that a user expects to customize an operation sequence;
providing (502) at least two operation modes in at least one functional step for completing the at least one functional step;
selecting (503) an operation mode from the at least two operation modes for completing the at least one functional step; and
generating (504) an operation sequence of the application service according to the selected operation modes of all the functional steps,
wherein selecting the operation mode for completing the at least one functional step comprises making the operation mode selected in the current functional step as a background process/thread of the mobile terminal and hiding the corresponding display interface in the process of the application service.

2. The method according to claim 1, wherein before the providing at least two operation modes for completing the at least one functional step, the method further comprises:
recording a use habit of a user, and searching for the corresponding operation mode according to the use habit.

3. The method according to claim 1, wherein each operation mode contained in the functional step corresponds to a display interface.

4. The method according to any one of claims 1 to 3, wherein providing at least two operation modes in at least one functional step for completing the at least one functional step further comprises:
when the at least one functional step is to input information of a contact person, the provided operation modes comprising at least one of: directly inputting a number, selecting the contact person from a telephone directory and selecting the contact person from a frequently used contact person list.

5. A mobile terminal for optimizing a mobile terminal operation sequence, **characterized in**, comprising:
an application service dividing module (101) configured to divide a process of an application service of the mobile terminal into one or more functional steps after receiving an instruction that a user expects to customize an operation sequence;
an operation mode providing module (102) configured to provide at least two operation modes in at least one functional step for completing the at least one functional step;
an operation mode recording module (103) configured to select an operation mode from the at least two operation modes for completing the at least one functional step; and
an operation sequence generating module (104) configured to form an operation sequence of the application service with the selected operation modes of all the functional steps,
wherein the operation mode recording module comprises a display interface hiding module configured to make the operation mode selected in the at least one functional step as a background process/thread of the mobile terminal, and hide the corresponding display interface in the process of the application service.

6. The mobile terminal according to claim 5, wherein the mobile terminal further comprises:
a dynamic memory module (106) configured to automatically record an operation habit of a user in the process of using the application service, search for an operation mode corresponding to the operation habit and send the corresponding operation mode to the operation mode providing module.

7. The mobile terminal according to claim 5, wherein the mobile terminal further comprises:
a scene setting module (105) configured to provide display interfaces corresponding to different operation modes in the at least one functional step.

8. The mobile terminal according to claim 7, wherein the scene setting module (105) further comprises:
a number direct inputting module (1051) configured to receive phone contact information of recipients directly input by the user;
a telephone directory module (1052) configured to store all the phone contact information recorded by the mobile terminal; and
a frequently used contact person module (1053) configured to record the phone contact information of the contact person which are frequently contacted by the user.

9. A method for implementing a mobile terminal application service, comprising:
the steps of the method according to any one of claims 1 to 4; and
executing (604) the selected operation modes of all the functional steps.

## Patentansprüche

1. Verfahren zum Erzeugen der Betriebssequenz eines mobilen Endgeräts, **dadurch gekennzeichnet, dass** es Folgendes umfasst:
Aufteilen (501) eines Prozesses eines Anwendungsdienstes des mobilen Endgeräts in einen oder mehrere Funktionsschritte nach dem Empfangen einer Anweisung, dass ein Benutzer erwartet, eine Betriebssequenz zu personalisieren;
Bereitstellen (502) von mindestens zwei Betriebsmodi in mindestens einem Funktionsschritt zum Abschließen des mindestens einen Funktionsschritts,
Wählen (503) eines Betriebsmodus aus den mindestens zwei Betriebsmodi zum Abschließen des mindestens einen Funktionsschritts und
Erzeugen (504) einer Betriebssequenz des Anwendungsdienstes gemäß den gewählten Betriebsmodi aller Funktionsschritte,
wobei das Wählen des Betriebsmodus zum Abschließen des mindestens einen Funktionsschritts das Machen des in dem aktuellen Funktionsschritt gewählten Betriebsmodus als einen Hintergrundprozess/Thread des mobilen Endgeräts und das Verstecken der entsprechenden Displayschnittstelle im Prozess des Anwendungsdienstes umfasst.

2. Verfahren nach Anspruch 1, wobei das Verfahren vor dem Bereitstellen von mindestens zwei Betriebsmodi zum Abschließen des mindestens einen Funktionsschritts weiterhin Folgendes umfasst:
Aufzeichnen einer Verwendungsgewohnheit eines Benutzers und Suchen nach dem entsprechenden Betriebsmodus gemäß der Verwendungsgewohnheit.

3. Verfahren nach Anspruch 1, wobei jeder in dem Funktionsschritt enthaltene Betriebsmodus einer Displayschnittstelle entspricht.

4. Verfahren nach einem der Ansprüche 1 bis 3, wobei das Bereitstellen von mindestens zwei Betriebsmodi in mindestens einem Funktionsschritt zum Abschließen des mindestens einen Funktionsschritts weiterhin Folgendes umfasst:
wenn der mindestens eine Funktionsschritt Informationen einer Kontaktperson eingeben soll, umfassen die bereitgestellten Betriebsmodi mindestens einen der folgenden Punkte: direktes Eingeben einer Nummer, Wählen der Kontaktperson aus einem Telefonverzeichnis und Wählen der Kontaktperson aus einer häufig verwendeten Kontaktpersonenliste.

5. Mobiles Endgerät zur Optimierung der Betriebssequenz eines mobilen Endgeräts, **dadurch gekennzeichnet, dass** es Folgendes umfasst:
ein Anwendungsdienstunterteilungsmodul (101), das konfiguriert ist zum Aufteilen eines Prozesses eines Anwendungsdienstes des mobilen Endgeräts in einen oder
mehrere Funktionsschritte nach dem Empfangen einer Anweisung, dass ein Benutzer erwartet, eine Betriebssequenz zu personalisieren;
ein Betriebsmodusbereitstellungsmodul (102), konfiguriert zum Bereitstellen von mindestens zwei Betriebsmodi in mindestens einem Funktionsschritt zum Abschließen des mindestens einen Funktionsschritts,
ein Betriebsmodusaufzeichnungsmodul (103), konfiguriert zum Wählen eines Betriebsmodus aus den mindestens zwei Betriebsmodi zum Abschließen des mindestens einen Funktionsschritts und
ein Betriebssequenzerzeugungsmodul (104), konfiguriert zum Ausbilden einer Betriebssequenz des Anwendungsdienstes gemäß den gewählten Betriebsmodi aller Funktionsschritte,
wobei das Betriebsmodusaufzeichnungsmodul ein Displayschnittstellenversteckmodul umfasst, konfiguriert zum Machen des in dem mindestens einen Funktionsschritt gewählten Betriebsmodus als ein Hintergrundprozess/Thread des mobilen Endgeräts und Verstecken der entsprechenden Displayschnittstelle im Prozess des Anwendungsdienstes.

6. Mobiles Endgerät nach Anspruch 5, wobei das mobile Endgerät weiter Folgendes umfasst:
ein dynamisches Speichermodul (106), konfiguriert zum automatischen Aufzeichnen einer Betriebsgewohnheit eines Benutzers im Prozess des Verwendens des Anwendungsdienstes, Suchen nach einem Betriebsmodus entsprechend der Betriebsgewohnheit und Senden des entsprechenden Betriebsmodus an das Betriebsmodusbereitstellungsmodul.

7. Mobiles Endgerät nach Anspruch 5, wobei das mobile Endgerät weiterhin Folgendes umfasst:
ein Szeneneinstellmodul (105), konfiguriert zum Bereitstellen von Displayschnittstellen entsprechend unterschiedlicher Betriebsmodi in dem mindestens einen Funktionsschritt.

8. Mobiles Endgerät nach Anspruch 7, wobei das Szeneneinstellmodul (105) weiterhin Folgendes umfasst:
ein Nummerndirekteingabemodul (1051), konfiguriert zum Empfangen von Telefonkontaktinformationen von direkt durch den Benutzer eingegebenen Empfängern;
ein Telefonverzeichnismodul (1052), konfiguriert zum Speichern aller durch das mobile Endgerät aufgezeichneten Telefonkontaktinformationen; und
ein Häufige-Verwendete-Kontaktpersonen-Modul (1053), konfiguriert zum Aufzeichnen der Telefonkontaktinformationen der Kontaktpersonen, die von dem Benutzer häufig kontaktiert werden.

9. Verfahren zum Implementieren eines Anwendungsdienstes für ein mobiles Endgerät, das Folgendes umfasst:
die Schritte des Verfahrens nach einem der Ansprüche 1 bis 4 und
Ausführen (604) der gewählten Betriebsmodi aller Funktionsschritte.

## Revendications

1. Procédé de génération d'une séquence d'opérations de terminal mobile, **caractérisé en ce qu'**il comprend :
la division (501) d'un processus d'un service d'application du terminal mobile en une ou plusieurs étapes fonctionnelles après la réception d'une instruction attendue par un utilisateur pour personnaliser une séquence d'opérations ;
la fourniture (502) d'au moins deux modes de fonctionnement dans au moins une étape fonctionnelle pour réaliser l'au moins une étape fonctionnelle ;
la sélection (503) d'un mode de fonctionnement parmi les au moins deux modes de fonctionnement pour réaliser l'au moins une étape fonctionnelle ; et
la génération (504) d'une séquence d'opérations du service d'application en fonction des modes de fonctionnement sélectionnés de toutes les étapes fonctionnelles,
dans lequel la sélection du mode de fonctionnement pour réaliser l'au moins une étape fonctionnelle comprend la réalisation du mode de fonctionnement sélectionné dans l'étape fonctionnelle courante comme processus/filière de fond du terminal mobile et l'occultation de l'interface d'affichage correspondante dans le processus du service d'application.

2. Procédé selon la revendication 1, comprenant en outre, avant la fourniture d'au moins deux modes de fonctionnement pour réaliser l'au moins une étape fonctionnelle :
l'enregistrement d'une habitude d'usage d'un utilisateur, et la recherche du mode de fonctionnement correspondant en fonction de l'habitude d'usage.

3. Procédé selon la revendication 1, dans lequel chaque mode de fonctionnement contenu dans l'étape fonctionnelle correspond à une interface d'affichage.

4. Procédé selon l'une quelconque des revendications 1 à 3, dans lequel la fourniture d'au moins deux modes de fonctionnement dans au moins une étape fonctionnelle pour réaliser l'au moins une étape fonctionnelle comprend en outre :
quand l'au moins une étape fonctionnelle consiste en l'entrée d'informations d'un contact, les modes de fonctionnement fournis comprenant au moins l'un de : l'entrée directe d'un numéro, la sélection du contact dans un annuaire téléphonique et la sélection du contact parmi une liste de contacts fréquemment utilisés.

5. Terminal mobile pour optimiser une séquence d'opérations de terminal mobile, **caractérisé en ce qu'**il comprend :
un module de division de service d'application (101) configuré pour diviser un processus d'un service d'application du terminal mobile en une ou plusieurs étapes fonctionnelles après la réception d'une instruction attendue par un utilisateur pour personnaliser une séquence d'opérations ;
un module de fourniture de modes de fonctionnement (102) configuré pour fournir au moins deux modes de fonctionnement dans au moins une étape fonctionnelle pour réaliser l'au moins une étape fonctionnelle ;
un module d'enregistrement de mode de fonctionnement (103) configuré pour sélectionner un mode de fonctionnement parmi les au moins deux modes de fonctionnement pour réaliser l'au moins une étape fonctionnelle ; et
un module de génération de séquence de fonctionnement (104) configuré pour former une séquence d'opérations du service d'application avec les modes de fonctionnement sélectionnés de toutes les étapes fonctionnelles,
dans lequel le module d'enregistrement de mode de fonctionnement comprend un module d'occultation d'interface d'affichage configuré pour faire en sorte que le mode de fonctionnement sélectionné dans l'au moins une étape fonctionnelle fonctionne comme processus/filière de fond du terminal mobile et occulter l'interface d'affichage correspondante dans le processus du service d'application.

6. Terminal mobile selon la revendication 5, comprenant en outre :
un module de mémoire dynamique (106) configuré pour enregistrer automatiquement une habitude d'usage d'un utilisateur dans le processus d'utilisation du service d'application, rechercher un mode de fonctionnement correspondant à l'habitude d'usage et envoyer le mode de fonctionnement correspondant au module de fourniture de modes de fonctionnement.

7. Terminal mobile selon la revendication 5, dans lequel le terminal mobile comprend en outre :
un module d'établissement de scène (105) configuré pour fournir des interfaces d'affichage correspondant à différents modes de fonctionnement dans l'au moins une étape fonctionnelle.

8. Terminal mobile selon la revendication 7, dans lequel le module d'établissement de scène (105) comprend en outre :
un module d'entrée directe de numéro (1051) configuré pour recevoir des informations de contacts téléphoniques de destinataires entrées directement par l'utilisateur ;
un module d'annuaire téléphonique (1052) configuré pour mémoriser toutes les informations de contacts téléphoniques enregistrées par le terminal mobile ; et
un module de contacts fréquemment utilisés (1053) configuré pour enregistrer les informations de contacts téléphoniques des contacts qui sont fréquemment contactés par l'utilisateur.

9. Procédé de mise en oeuvre d'un service d'application de terminal mobile, comprenant:
les étapes du procédé selon l'une quelconque des revendications 1 à 4 ; et
l'exécution (604) des modes de fonctionnement sélectionnés de toutes les étapes fonctionnelles.
